# EUROPÄISCHE PATENTSCHRIFT

(11) **EP 2 473 719 B1**
(45) Veröffentlichungstag und Bekanntmachung des Hinweises auf die Patenterteilung: **07.11.2018**
(21) Anmeldenummer: 10752522.2
(22) Anmeldetag: 31.08.2010
(51) Int. Cl.: B01D 46/00, F01N 3/02

(54) **VERBRENNUNGSANLAGE SOWIE VERFAHREN ZUR REINIGUNG EINER IN EINEM ABGASKANAL EINER VERBRENNUNGSANLAGE INSTALLIERTEN KATALYSATOREINRICHTUNG**
COMBUSTION SYSTEM AND PROCESS OF CLEANING THE CATALYST SYSTEM INCORPORATED IN THIS COMBUSTION SYSTEM
INSTALLATION DE COMBUSTION ET PROCÉDÉ DE NETTOYAGE D'UN SYSTÈME CATALYSEUR INCORPORÉ DANS L'INSTALLATION DE COMBUSTION

(30) Priorität: 01.09.2009 DE 102009039536
(43) Veröffentlichungstag der Anmeldung: 11.07.2012
(73) Patentinhaber: Johnson Matthey Catalysts (Germany) GmbH, 96257 Redwitz (DE)
(72) Erfinder: STROBL, Klaus, 86570 Inchenhofen (DE)
(74) Vertreter: Nunn, Andrew Dominic
(86) Internationale Anmeldenummer: PCT/EP2010/005340
(87) Internationale Veröffentlichungsnummer: WO 2011/026602

(56) Entgegenhaltungen:
- EP-A2- 0 824 973
- DE-A1-102004 062 677
- GB-A- 1 072 904
- JP-A- 2007 170 277
- JP-A- 2008 029 912
- US-A- 5 272 874

## Beschreibung

Die Erfindung betrifft eine Verbrennungsanlage sowie ein Verfahren zur Reinigung einer in einem Abgaskanal einer Verbrennungsanlage installierten Katalysatoreinrichtung, mit den Merkmalen des Oberbegriffs des Anspruchs 1 bzw. des Anspruchs 12.

Eine derartige Verbrennungsanlage ist aus der DE 10 2004 062 677 A1 zu entnehmen. Diese Vorrichtung weist ein Filterpaket bestehend aus mehreren ineinander geschobenen rohrförmigen Körpern auf und dient als ein Dieselrußfilter für einen Verbrennungsmotor. Zum Reinigen des Filterpackets wird dieses ausgebaut und einer Reinigung beispielsweise mittels Druck- oder Saugluft oder mittels rotierender Bürsten unterzogen.

Aus der EP 0 824 973 A2 ist ebenfalls eine Vorrichtung und ein Verfahren zum Reinigen beispielsweise von SCR-Wabenkatalysatoren bekannt, bei der die zu reinigenden Katalysatoren ebenfalls zunächst aus der Verbrennungsanlage ausgebaut und der Reinigungseinrichtung zur Reinigung zugeführt werden. Zum Reinigen wird hierbei eine Reinigungsflüssigkeit eingesetzt.

Unter Verbrennungsanlage werden vorliegend insbesondere großtechnische Anlagen verstanden, die eine Leistung von einigen MW bis hin zu 100 MW aufweisen. Insbesondere werden hierunter Verbrennungsmotoranlagen verstanden, bei denen die Leistung übereinen Verbrennungsmotor, insbesondere einen Dieselmotor bereitgestellt wird. Derartige Verbrennungsmotoranlagen werden beispielsweise als stationäre Anlagen in einem Kraftwerk zur Energieerzeugung eingesetzt. Darüber hinaus finden derartige Dieselmotoranlagen auch Einsatz als Antriebsmotor im Schiffsbereich, insbesondere bei großen Frachtschiffen.

Unter Verbrennungsanlage wird daneben auch ein Verbrennungsmotor für Lastkraftwagen und Schienenfahrzeuge verstanden.

Bei derartigen Verbrennungsanlagen ist üblicherweise in einem Abgaskanal der Verbrennungsanlage eine katalytische Abgasreinigungseinrichtung mit einer Katalysatoreinrichtung vorgesehen. Zur Reduzierung oder Entfernung der im Abgas enthaltenen Schadstoffe kommen hierbei unterschiedliche Katalysatoren zum Einsatz. Beispielsweise wird ein sogenannter Entstickungskatalysator (sogenannter DeNOx-Katalysator) eingesetzt. Bei diesem werden im Abgas enthaltene Stickstoffe unter Beimischung eines Reduktionsmittels, wie beispielsweise Ammoniak oder einem Vorläuferprodukt hiervon wie wässrige Harnstofflösung, zu Stickstoff und Wasser umgesetzt wird. Derartige Katalysatoren werden auch als SCR-Katalysatoren bezeichnet, da sie nach dem Prinzip der selektiven katalytischen Reduktion arbeiten. Das Reduktionsmittel wird üblicherweise als Harnstofflösung vor der Katalysatoreinrichtung in den Abgaskanal eingedüst.

JP 2007-170 277 A beschreibt eine Abgasemissionssteuerungsvorrichtung für ein Fahrzeug, die einen Katalysator zum Reinigen von aus einem Verbrennungsmotor emittiertem Abgas umfasst. Die Abgasemissionssterungsvorrichtung umfasst ferner eine rotierende Bürste zum Kehren und/oder Reinigen des Einlassendes des Katalysators.

Die Katalysatoreinrichtung kann insbesondere bei großtechnischen Verbrennungsanlagen hierbei eine Vielzahl von einzelnen modulartig nebeneinander geordneten Katalysatoren aufweisen, die jeweils eine Vielzahl von einzelnen vom Abgas durchströmbare Strömungs- oder Katalysatorkanäle aufweisen, um eine möglichst große katalytisch aktive Oberfläche bereitzustellen. Die Katalysatoren sind hierbei beispielsweise als extrudierte Wabenkatalysatoren ausgebildet, die aus einem katalytischen Material bestehen bzw. mit einem solchen beschichtet oder imprägniert sind.

Aufgrund der üblicherweise sehr feinen Ausbildung der einzelnen Strömungskanäle mit sehr geringen Querschnittsflächen besteht bei der Anwendung derartiger Katalysatoreinrichtungen bei Verbrennungsmotorenanlagen, insbesondere Dieselmotorenanlagen das Problem, dass die Eintrittsseite der Katalysatoren mit Ablagerungen, nämlich insbesondere mit Ruß, der vorwiegend bei der Verbrennung von Schwerölen oder anderen schwer verbrennbaren Treibstoffen entsteht, verstopft. Als Folge reduziert sich die zur Verfügung stehende Katalysatoroberfläche, so dass die katalytische Oberflächenreaktion deutlich verringert wird und die Abgaswerte sich verschlechtern, also die Reinigungswirkung der Katalysatoreinrichtung nachlässt. Ergänzend steigt oftmals in Folge der Verschmutzung der sogenannte Abgasgegendruck der Verbrennungsanlage, da nur noch ein kleinerer Strömungsquerschnitt für das Abgas bereitgestellt ist. Dies führt zu einem Mehrverbrauch des Treibstoffs für den Verbrennungsmotor, weil dessen Wirkungsgrad aufgrund des ansteigenden Abgasgegendrucks abfällt.

Zur Beseitigung dieser Ablagerungen besteht die Möglichkeit, diese mit Druckluft oder Heißdampf abzublasen. Hierzu sind seitlich im Abgaskanal angebrachte Eindüseinrichtungen, sogenannte Rußbläserventile angeordnet, über die die Druckluft oder der Heißdampf mit hohem Druck kurzzeitig eingeblasen wird. Dadurch wird der Staub an der Eingangsseite aufgewirbelt, der dann zusammen mit dem strömenden Abgas durch die Katalysatoreinrichtung hindurchgeführt wird. Der Einblasdruck wird über geeignete Verdichter aufgebracht, wobei üblicherweise aufwändige Ringversorgungsleitungen vorgesehen sein müssen, um die verteilt angeordneten Rußbläserventile mit dem Fluid zu versorgen. Bei der Verwendung von Heißdampf muss dieser aus dem Anlagenprozess entnommen oder von einer separaten Energiequelle bereitgestellt werden. In der Praxis werden derartige Rußblasventile regelmäßig beispielsweise bis alle 20 Sekunden aktiviert und verbrauchen daher besonders viel Energie. Weiterhin besteht das Problem, dass aufgrund der diskreten Anordnung der Rußblasventile nicht zuverlässig die gesamte Eintrittsseite der Katalysatoreinrichtung gereinigt werden kann. Es bilden sich daher Strömungstoträume aus, an denen die Ablagerungen nicht entfernt werden und in denen daher ein Zusetzen der Katalysatorkanäle erfolgt. Dies führt zu einer deutlichen Verminderung der katalytisch aktiven Oberfläche. Die gesamte Katalysatoreinrichtung wird daher üblicherweise mit erheblichen Sicherheitsreserven ausgelegt, was zu zusätzlichen Kosten führt.

Aufgrund der bei derartigen großtechnischer Verbrennungsanlagen großen Abgasmengen ist eine entsprechend große Anström - oder Querschnittsfläche der Katalysatoreinrichtung erforderlich. Der Abgaskanal weist beispielsweise im Bereich der Katalysatoreinrichtung oftmals eine Querschnittsfläche von mehreren m², insbesondere mehrere 10 m² bis hin in die Größenordnung von 100 m² auf. Auch sind für eine effektive Abgasreinigung oftmals mehrere Katalysatorlagen in Strömungsrichtung des Abgases hintereinander angeordnet. Das Problem der Rußablagerungen tritt hierbei in erster Linie an der Eintrittsseite der Katalysatoreinrichtung, also an der Eintrittsseite der ersten Katalysatorlage auf, die quasi auch nach Art eines Filters wirkt.

Der Erfindung liegt die Aufgabe zu Grunde, bei einer Verbrennungsanlage eine effektive Reinigung der Eintrittsseite einer in einem Abgaskanal einer derartigen Verbrennungsanlage angeordneten Katalysatoreinrichtung zu ermöglichen.

Die Aufgabe wird gemäß der Erfindung gelöst durch eine Verbrennungsanlage, insbesondere eine großtechnische Verbrennungsmotoranlage, beispielsweise eine stationäre Verbrennungsmotoranlage zur Energieerzeugung oder auch eine Schiffsmotorenanlage. Die Verbrennungsanlage umfasst einen Abgaskanal zum Abführen eines bei der Verbrennung entstehenden Abgases. Im Abgaskanal ist eine vom Abgas durchströmbare Katalysatoreinrichtung zur katalytischen Abgasreinigung angeordnet, die üblicherweise eine Vielzahl von sich in Strömungsrichtung des Abgases erstreckende Strömungskanäle mit geringer Querschnittsfläche typischerweise im Bereich deutlich kleiner 1 cm² aufweist. Diese Strömungskanäle weisen an einer Eintrittsseite der Katalysatoreinrichtung Eintrittsöffnungen für das Abgas auf. Zu deren Reinigung und der Entfernung von Ablagerungen ist eine Reinigungseinrichtung vorgesehen, die eine Reinigungsbürste zum mechanischen Entfernen der Ablagerungen an der Eintrittsseite umfasst. Vorzugsweise erstreckt sich die Reinigungseinrichtung über die gesamte Breite der Eintrittsseite, also insbesondere über die Breite einer Anströmfläche der Katalysatoreinrichtung.

Durch die Reinigungsbürste werden effektiv und zuverlässig die sich ausbildenden Ablagerungen entfernt und aufgewirbelt und werden mit dem Abgas in Strömungsrichtung durch die Katalysatoreinrichtung abgeführt werden. Durch die mechanische Behandlung werden hierbei in vorteilhafterweise die abgelagerten Partikel zusätzlich verkleinert, so dass sie effektiver und zuverlässiger mit dem Abgas durch die Katalysatoreinrichtung durchströmen können, ohne diese zuzusetzen. Ein weiterer wesentlicher Vorteil ist darin zu sehen, dass durch die Verwendung der Reinigungsbürste die gesamte Fläche der Eintrittsseite der Katalysatoreinrichtung zuverlässig von den Ablagerungen befreit werden kann, so dass sich keine Totzonen ausbilden, in denen die Strömungskanäle zusetzen. Dadurch kann insgesamt die Querschnittsfläche der Katalysatoreinrichtung gering gehalten werden und die Katalysatoreinrichtung kann mit vergleichsweise geringen Sicherheitsreserven ausgelegt werden, wodurch deutliche Kosteneinsparungen im Vergleich zu dem bisherigen Verfahren mit dem Abblasen der Ablagerungen erzielbar sind.

Die Reinigungsbürste rotiert hierbei insbesondere um eine Rotationsachse und weist Bürstenhaare auf. Diese sind typischerweise elastisch ausgebildet, so dass sie beim Bürstbetrieb sich an die Eintrittsseite anschmiegen und teilweise auch ein Stück weit in die Strömungskanäle eindringen, so dass deren Eintrittsöffnungen dadurch sehr effektiv sauber gehalten werden. Als Material für die Reinigungsbürste wird ein ausreichend hochtemperaturbeständiges Material verwendet, das insbesondere bis zu einer Temperatur von etwa 600° temperaturstabil ist.

Als temperaturbeständiges Material wird beispielsweise Stahl, Aluminium oder auch ein hochtemperaturbeständiger Kunststoff eingesetzt.

Zweckdienlicherweise überdeckt die Reinigungsbürste nur einen Bruchteil der Eintrittsseite und ist über die Eintrittsseite während des Betriebs der Verbrennungsanlage verfahrbar. Durch die Verfahrbarkeit wird jeder Bereich der Eintrittsseite von der Reinigungsbürste erreicht. Gleichzeitig ist der durch die Reinigungsbürste erzeugte Strömungswiderstand möglichst gering gehalten. Ist keine Reinigung notwendig verfährt die Bürstenreinigungseinrichtung vorzugsweise in eine Parkposition, die außerhalb der Katalysatoreintrittsfläche liegt. Hierdurch wird jeglicher Druckverlust vermieden. Die von der Reinigungseinrichtung mit der Reinigungsbürste überdeckte Querschnittsfläche der gesamten Katalysatoreinrichtung liegt hierbei deutlich unter 10 % der Fläche der Eintrittsseite der Katalysatoreinrichtung und insbesondere im Bereich von etwa 1 % bis 5 % der Fläche der Eintrittsseite.

Vorzugsweise ist die Reinigungsbürste walzenförmig ausgebildet und rotiert im Betrieb um ihre Walzenlängsachse. Hierdurch wird der abgekratzte Staub von der Bürste zunächst von der Eintrittsseite entfernt und aufgrund der Rotations- und Fliehkräfte rückwärtig wieder in den Abgasstrom geworfen. Hierdurch ist vermieden, dass die Ablagerungen, nämlich Ruß- und Staubpartikel, an der Eintrittsseite eingerieben werden oder die Bürste sich zusetzt.

Gemäß einer bevorzugten Ausgestaltung erstreckt sich die Reinigungsbürste über die gesamte Breite der Eintrittsseite. In diesem Fall braucht die Bürste daher nur in einer Bewegungsrichtung, beispielsweise in Längs- oder Querrichtung verfahren zu werden. Zweckdienlicherweise ist hierbei vorgesehen, dass die Reinigungsbürste an randseitig verlaufenden Führungsschienen in Längs- oder Querrichtung geführt und verfahrbar ist.

Allgemein sind zum Verfahren der Reinigungsbürste Führungselemente wie Führungsschienen oder Führungsstangen vorgesehen, die vorzugsweise randseitig am Abgaskanal abgeordnet sind.

Gemäß einer bevorzugten Alternative erstreckt sich die Reinigungsbürste nicht über die gesamte Breite. In diesem Fall ist die Reinigungsbürste sowohl in Querals auch in Längsrichtung verfahrbar. Ergänzend ist eine Querführung vorgesehen, die sich über die Eintrittsseite erstreckt und insbesondere mit den randseitigen Führungselementen verbunden oder dort gelagert ist. Zum Verfahren der Reinigungseinrichtung sind allgemein entsprechende Antriebe vorgesehen, die die Reinigungseinrichtung in Quer- oder in Quer- und in Längsrichtung verfahren.

Um die Reinigungsbürste möglichst langfristig betriebsbereit zu halten und ein Zusetzen der Reinigungsbürste zu vermeiden ist der Reinigungsbürste ein Abstreifelement, ein sogenanntes Rakel, zugeordnet. Dieses dient zum Reinigen der Bürstenhaare der Reinigungsbürste. Zweckdienlicherweise ist das Abstreifelement in Rotationsrichtung der Bürste unmittelbar nachlaufend angeordnet, beispielsweise bei einem Drehwinkel im Bereich zwischen 60° und 150° bezogen auf die Strömungsrichtung des Abgases. Das Abstreifelement ist allgemein derart positioniert, dass die einzelnen Bürstenhaare über das Abstreifelement mechanisch hinweg streichen, so dass an den Bürstenhaaren befindliche Partikel zuverlässig abgestreift werden.

Zweckdienlicherweise weist das Abstreifelement eine Abstreifkante auf, die in etwa radial zur Bürstendrehachse, nämlich der Walzenlängsachse, orientiert ist, und zwar derart, dass die Bürstenhaare beim Abstreifprozess zunächst elastisch gespannt werden und sich anschließend insbesondere wieder schlagartig entspannen. Durch diese Ausgestaltung wird aufgrund der Elastizität der Bürstenhaare eine zusätzliche Reinigungswirkung für die Bürstenhaare erzielt, da durch die elastische Spannkraft beim Entspannen die an den Bürstenhaaren eventuell noch befindlichen Restpartikel weggeschleudert werden.

Ergänzend zu der Reinigungsbürste umfasst die Reinigungseinrichtung zweckdienlicherweise eine Eindüseinrichtung, beispielsweise eine Sprüheinrichtung mit einer Vielzahl von Düsen für ein Reinigungsfluid. Das Reinigungsfluid ist beispielsweise reine Druckluft oder mit Reinigungsflüssigkeit vermischte Druckluft oder auch eine reine Reinigungsflüssigkeit, die versprüht wird. Bevorzugt ist die Sprüheinrichtung hierbei derart orientiert, dass das Reinigungsfluid direkt auf die Eintrittsseite oder wahlweise auf die Bürstenhaare gesprüht wird. Durch das Einbringen des Reinigungsfluides wird die Reinigungswirkung zusätzlich unterstützt. Beim direkten Aufbringen auf die Bürstenhaare wird zusätzlich die Reinigung der Bürstenhaare selbst unterstützt und ein Zusetzen der Bürste möglichst langfristig vermieden.

Zweckdienlicherweise ist die Eindüseinrichtung der Reinigungsbürste zugeordnet und gemeinsam mit dieser verfahrbar. Es ist daher nicht erforderlich, umlaufend um die gesamte Katalysatoreinrichtung Düsen zum Einbringen des Reinigungsfluides vorzusehen. Vielmehr ist ein zielgenaues und damit effizientes Einbringen des Reinigungsfluides erzielt. Die Eindüseinrichtung ist hierbei zweckdienlicherweise in Bewegungsrichtung der Bürste vorlaufend angeordnet, so dass das Reinigungsfluid auf die Eintrittsseite oder auf die Bürstenhaare aufgebracht wird, bevor die zu reinigende Stelle von den Bürstenhaaren überstrichen wird.

In einer bevorzugten Ausgestaltung umfasst die Reinigungseinrichtung ein Gehäuse, in dem die Reinigungsbürste angeordnet ist und welches zumindest zur Eintrittsseite der Katalysatoreinrichtung offen ist. Zweckdienlicherweise ist das Gehäuse auch zur Unterseite hin offen, so dass die abgekratzten Partikel nach unten ausgeschleudert werden können. Zur rückwärtigen, also der Eintrittsseite gegenüberliegenden Seite, ist das Gehäuse mit einer Anströmfläche versehen, die im Betrieb von dem strömenden Abgas angeströmt und umströmt wird. Diese Anströmfläche kann bei Bedarf geeignet gestaltet werden, um den durch die Reinigungseinrichtung bedingten Strömungswiderstand möglichst gering zu halten.

In diesem Gehäuse ist zweckdienlicherweise auch die Eindüseinrichtung angeordnet. Insgesamt ist die Reinigungseinrichtung daher vorzugsweise als eine über die Eintrittsseite der Katalysatoreinrichtung hinweg verfahrbare Gehäusebaueinheit ausgebildet, die beispielsweise mit Hilfe von Führungselementen in Quer- und Längsrichtung geführt wird.

Für den Antrieb der Reinigungsbürste ist zweckdienlicherweise ein Fluidmotor vorgesehen, die Bürste wird daher vorzugsweise pneumatisch oder auch hydraulisch angetrieben. Ein derartiger insbesondere als Pneumatikmotor ausgebildeter Antrieb weist nur eine geringe Störanfälligkeit auf.

Gemäß einer bevorzugten Ausgestaltung umfasst die Katalysatoreinrichtung mehrere in Strömungsrichtung des Abgases aufeinanderfolgende Katalysatorlagen. Mindestens einer der Katalysatorlagen, vorzugsweise der ersten Katalysatoranlage ist hierbei eine Reinigungseinrichtung zugeordnet sein. Zweckdienlicherweise ist lediglich der ersten Katalysatorlage eine Reinigungseinrichtung mit einer Reinigungsbürste zugeordnet ist, da an der ersten Katalysatorlage die meisten Ablagerungen auftreten. An den nachfolgenden Katalysatorlagen ist beispielsweise als Reinigungseinrichtung eine herkömmliche Abblaseinrichtung angeordnet.

Die Aufgabe wird erfindungsgemäß weiterhin gelöst durch ein Verfahren zur Reinigung einer in einem Abgaskanal einer Verbrennungsanlage installierten Katalysatoreinrichtung, bei dem eine Eintrittsseite der Katalysatoreinrichtung mit Hilfe einer Reinigungsbürste von Ablagerungen befreit wird. Die Reinigung erfolgt hierbei insbesondere während des Betriebs. Die Reinigungseinrichtung ist dabei als eine traversierende Baueinheit ausgebildet, die über die zu reinigende Fläche der Eintrittsseite kontinuierlich oder auch in bestimmten Reinigungsintervallen verfährt.

Ausführungsbeispiele der Erfindung werden im Folgenden anhand der Zeichnungen näher erläutert. Es zeigen jeweils in schematisch und stark vereinfachten Darstellungen:
- Fig. 1: Eine stark vereinfachte ausschnittsweise Darstellung einer großtechnischen Verbrennungsanlage,
- Fig. 2: eine ausschnittsweise, teilweise geschnittene Seitendarstellung mit einer Reinigungseinrichtung und einer ausschnittsweise dargestellten Katalysatoreinrichtung gemäß einer ersten Ausführungsvariante mit einer sowohl in Quer- als auch in Längsrichtung traversierenden Gehäuse-Baueinheit,
- Fig. 3: eine zur Fig. 2 vergleichbare Darstellung einer alternativen Ausgestaltung mit einer sich über die gesamte Breite der Katalysatoreinrichtung erstreckenden Reinigungsbürste und
- Fig. 4: eine ausschnittsweise Aufsicht auf eine Reinigungseinrichtung und der Eintrittsseite einer Katalysatoreinrichtung gemäß der zweiten Ausführungsvariante.

In den Figuren sind gleichwirkende Teile mit den gleichen Bezugszeichen versehen.

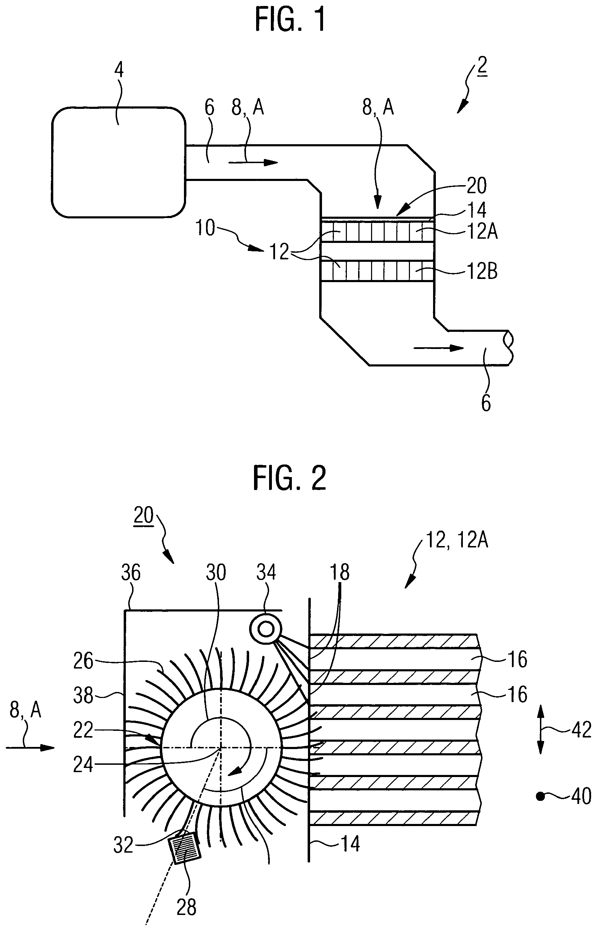

In Figur 1 ist schematisch und stark vereinfacht eine Verbrennungsanlage 2 dargestellt, die eine Verbrennungseinheit, insbesondere Verbrennungsmotor 4, vorzugsweise Dieselmotor umfasst, an den sich ein Abgaskanal 6 anschließt. Der Abgaskanal wird von einem Abgas A in Strömungsrichtung 8 durchströmt. In Strömungsrichtung 8 ist eine katalytische Abgasreinigungseinrichtung 10 vorgesehen. Hierzu verbreitert sich der Abgaskanal 6 deutlich, um eine ausreichend große Querschnittsfläche aufzuweisen. Die üblicherweise rechteckige Querschnittsfläche des Abgaskanals 6 im Bereich der Abgasreinigungseinrichtung 10 beträgt beispielsweise von 1 bis zu 30 m².

Die Abgasreinigungseinrichtung 10 umfasst eine Katalysatoreinrichtung 12, die im Ausführungsbeispiel zwei Katalysatorlagen 12A, 12B aufweist. In jeder der beiden Katalysatorlagen sind üblicherweise eine Vielzahl von einzelnen Katalysatorelementen oder auch Katalysatormodule mit jeweils einem Einbaurahmen angeordnet. Bei den Katalysatorelementen handelt es sich beispielsweise um sogenannte SCR-Katalysatoren. In diesem Fall wird in Strömungsrichtung 8 vor der Katalysatoreinrichtung 12 noch ein Reduktionsmittel, insbesondere eine Harnstofflösung in den Abgasstrom eingedüst.

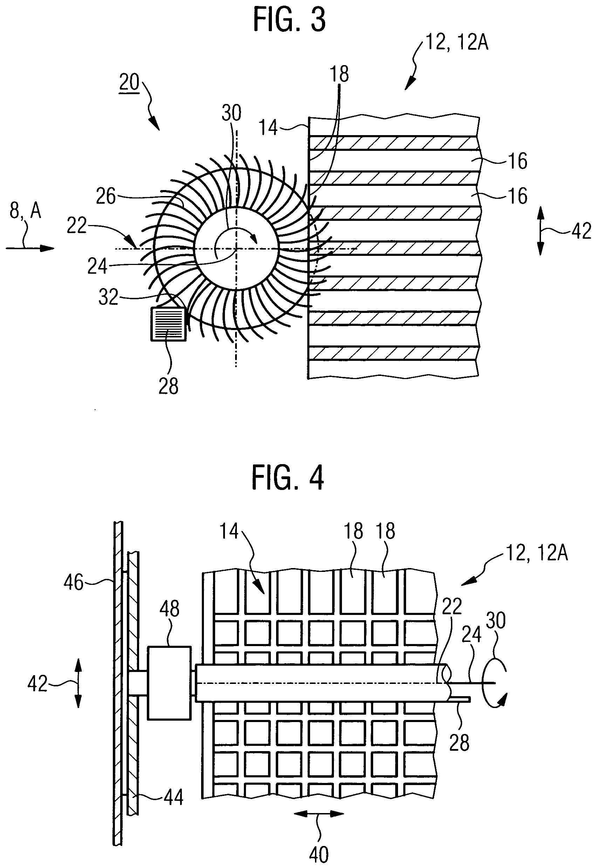

Die Katalysatoreinrichtung 12 weist eine Eintrittsseite 14 auf, an der das Abgas A in die Katalysatoreinrichtung 12 eintritt und diese in Strömungsrichtung 8 durchströmt. Die einzelnen Katalysatorelemente weisen hierbei sich in Strömungsrichtung 8 erstreckende Strömungskanäle 16 auf, die an der Eintrittsseite 14 Eintrittsöffnungen 18 aufweisen. Die Katalysatorelemente 6 sind hierbei typischerweise wabenförmig ausgebildet. Bei den Katalysatoren handelt es sich also insbesondere um sogenannte Wabenkatalysatoren, die durch Extrusion einer extrudierbaren keramischen Masse hergestellt werden. Die Querschnittsfläche der Eintrittsöffnungen 18 liegt typischerweise im Bereich von 7 bis 50 mm² (vgl. Figur 2, 3).

Vor der Katalysatoreinrichtung 12 ist eine in Figur 1 nur schematisch angedeutete Reinigungseinrichtung 20 angeordnet, mit der die Eintrittsseite 14 von Ablagerungen, wie beispielsweise Ruß- und Staubpartikel befreit wird.

Wie aus den Figuren 2 und 3 zu entnehmen ist, umfasst diese in beiden Ausführungsvarianten der Figuren 2 und 3 eine Reinigungsbürste 22, die walzen- oder zylinderförmig ausgebildet ist und um eine Walzenlängsachse 24 rotierbar ist. Die Reinigungsbürste 22 weist an der Mantelfläche eines Grundkörpers eine Vielzahl von einzelnen Bürstenhaaren 26 auf. Die Reinigungseinrichtung 20 umfasst weiterhin ein Abstreifelement 28, welches beispielsweise als in Richtung der Walzenlängsachse 24 verlaufende Mehrkantstange ausgebildet ist. Es weist eine Abstreifkante 32 auf, die in etwa in radialer Ausrichtung zur Walzenlängsachse 24 hin orientiert ist. Das Abstreifelement 28 ist derart angeordnet, dass eine Radiale durch die Abstreifkante 32 unter einem Winkel α bezüglich einer Normalen der Eintrittsseite 14 (entspricht der Strömungsrichtung 8) angeordnet ist. Das Abstreifelement 28 ist in Drehrichtung 30 der Reinigungsbürste 22 bevorzugt nachlaufend zu der Eintrittsseite 14 angeordnet. Der Winkel α liegt bevorzugt in einem Bereich von etwa 60° bis 150°.

Beim Ausführungsbeispiel der Figur 2 ist ergänzend eine Eindüseinrichtung 34 vorgesehen, über die ein Reinigungsfluid eingedüst werden kann, beispielsweise Druckluft, ein Reinigungsaerosol, oder eine reine Reinigungsflüssigkeit. Die Eindüseinrichtung 34 weist hierzu beispielsweise eine Mehrzahl von einzelnen hier nicht näher dargestellten Düsen auf, die in Längsrichtung der Reinigungsbürste 22 gleichmäßig beabstandet angeordnet sind. Die Eindüseinrichtung 34 ist hierbei in Drehrichtung 30 vorzugsweise vorlaufend zur Reinigungsbürste 22 angeordnet. Im Ausführungsbeispiel gemäß Figur 2 ist die Eindüseinrichtung 34 derart orientiert, dass das Reinigungsfluid direkt auf die Eintrittsseite 14 und in die Eintrittsöffnungen 18 gesprüht wird.

Beim Ausführungsbeispiel gemäß der Figur 2 umfasst die Reinigungseinrichtung 20 ergänzend noch ein Gehäuse 36, welches im Ausführungsbeispiel eine rückseitige Anströmfläche 38 sowie eine obere Wand und gegenüberliegende Stirnwände an der Stirnseite der Reinigungsbürste 22 aufweist, in der diese rotierbar gelagert ist. Das Gehäuse 36 ist sowohl zur Eintrittsseite 14 nach vorne hin als auch nach unten hin, wo das Abstreifelement 28 angeordnet ist, offen. Die in Figur 2 dargestellte Reinigungseinrichtung 20 ist daher insbesondere als traversierende Gehäuse-Baueinheit ausgebildet, die sowohl in Querrichtung 40, also in Walzenlängsrichtung 24 über die Breite der Katalysatoreinrichtung 12, als auch in Längsrichtung 42 senkrecht zu dieser Querrichtung 40 verfahrbar ist. Hierzu ist beispielsweise vorgesehen, dass das Gehäuse 36 an einer hier nicht näher dargestellten Trageinheit verfahrbar angeordnet ist. Diese Trageinheit weist beispielsweise eine Quertraverse auf, die an ihren Enden in zwei Längsführungen geführt ist, so dass die Trageinheit in etwa H-förmig ausgebildet ist.

Im Unterschied hierzu ist bei dem zweiten in den Figuren 3 und 4 dargestellten Ausführungsbeispiel vorgesehen, dass die Reinigungsbürste 22 sich in Querrichtung 40 über die gesamte Breite der Katalysatoreinrichtung 12 erstreckt. Im dargestellten Ausführungsbeispiel ist kein Gehäuse 36 vorgesehen. Zur Verbesserung der Anströmbedingungen kann aber auch in diesem Ausführungsbeispiel ein Gehäuse 36 vorgesehen sein.

Wie insbesondere aus der ausschnittsweisen Aufsichtdarstellung gemäß Figur 4 zu entnehmen ist, ist die Reinigungsbürste 22 seitlich an einer Längsführung 44 gelagert. Figur 4 zeigt hierbei nur eine ausschnittsweise Darstellung, so dass nur eine Längsführung auf der linken Bildhälfte dargestellt ist. Die Reinigungsbürste 22 ist entlang der Längsführung 44 in Längsrichtung 42 verfahrbar. Die Längsführung 44 ist hierbei an der Innenseite einer Wand 46 des Abgaskanals 6 angeordnet. Die Reinigungsbürste 22 wird von einem insbesondere als Fluidmotor 48 ausgebildeten Antriebsmotor in Rotation versetzt, der beispielsweise wie dargestellt unmittelbar auf einer Bürstenwelle der Reinigungsbürste 22 angeordnet ist. Unter Fluidmotor wird ein mit einem unter Druck stehendes Fluid, insbesondere Druckluft, antreibbarer Motor verstanden. Der Fluidmotor 48 ist daher vorzugsweise als Pneumatikmotor ausgebildet.

Im Betrieb der Verbrennungsanlage 2 verfährt die Reinigungseinrichtung 2 entweder kontinuierlich oder in bestimmten Intervallen über die Eintrittsseite 14 hinweg und befreit diese dabei von Ablagerungen. Durch die Rotation der Reinigungsbürste 22 kratzen hierbei die Bürstenhaare 26 Ablagerungen wie Staub- und Rußpartikel von der Oberfläche der Eintrittsseite 14 ab. Durch ihre Elastizität streifen die Bürstenhaare 26 über die Eintrittsseite 14 hinweg, werden dabei etwas abgewinkelt und können dadurch auch etwas in die Strömungskanäle 16 eindringen, so dass eine gewisse Tiefenreinigung erreicht wird. Für eine besonders effektive Reinigung kann hierbei vorgesehen sein, dass die Drehrichtung 30 der Reinigungsbürste 22 alternierend umgekehrt wird.

Die von den Bürstenhaaren 26 abgeschabten oder abgekratzten Partikel werden von den Bürstenhaaren 26 mitgerissen. Anschließend werden sie entweder allein aufgrund der Fliehkraft oder mit Hilfe des Abstreifelements 28 von den Bürstenhaaren 26 entfernt und in das strömende Abgas A eingebracht. Diese insbesondere durch die mechanische Behandlung nunmehr auch verkleinerten Partikel werden mit dem strömenden Abgas A durch die Strömungskanäle 16 abgeführt.

Für ein effektives Abstreifen der Partikel von den Bürstenhaaren 26 ist die spezielle Orientierung der Abstreifkante 32 und die Formgebung des Abstreifelements 28 insgesamt von besonderer Bedeutung. Durch ihre Elastizität werden die Bürstenhaare 26 beim Abstreifvorgang nämlich zunächst elastisch abgewinkelt, um dann bei weitergehender Rotation der Reinigungsbürste 22 sich insbesondere wieder schlagartig zu entspannen, so dass die Partikel quasi weggeschleudert werden.

Durch das Eindüsen eines Reinigungsfluids, insbesondere einer Reinigungsflüssigkeit oder eines Aerosols, bei dem allgemein die Reinigungsflüssigkeit homogen in die Eintrittsöffnungen 18 verteilt wird, lösen sich eventuell festsitzende Ablagerungen an und können dann effektiv mechanisch durch die Reinigungsbürste 22 entfernt werden.

Im Ausführungsbeispiel der Figur 2 wird die Reinigung der Reinigungsbürste 22 durch die Eindüseinrichtung 34 unterstützt, indem auch die Bürstenhaare 26 mit einem Reinigungsfluid beaufschlagt werden. Beispielsweise kann hierdurch Staub von den Bürstenhaaren 26 abgeblasen werden. Prinzipiell besteht die Möglichkeit, dass zwei getrennte Eindüseinrichtungen 34 vorgesehen sind, wobei diese mit unterschiedlichen Reinigungsfluiden und in unterschiedlicher Orientierung angeordnet sein können. Die Zufuhr des Reinigungsfluids erfolgt hierbei vorzugsweise außerhalb des Abgaskanals 6 und anschließend innerhalb des Abgaskanals beispielsweise über die Längsführung 44 und gegebenenfalls Quertraverse zur Eindüseinrichtung 34 hin.

### Bezugszeichenliste

- 2: Verbrennungsanlage
- 4: Verbrennungsmotor
- 6: Abgaskanal
- 8: Strömungsrichtung
- 10: Abgasreinigungseinrichtung
- 12: Katalysatoreinrichtung
- 12A, 12B: Katalysatorlagen
- 14: Eintrittsseite
- 16: Strömungskanal
- 18: Eintrittsöffnung
- 20: Reinigungseinrichtung
- 22: Reinigungsbürste
- 24: Walzenlängsachse
- 26: Bürstenhaar
- 28: Abstreifelement
- 30: Drehrichtung
- 32: Abstreifkante
- 34: Eindüseinrichtung
- 36: Gehäuse
- 38: Anströmfläche
- 40: Querrichtung
- 42: Längsrichtung
- 44: Längsführung
- 46: Wand
- 48: Antriebsmotor

- A: Abgas

## Patentansprüche

1. Verbrennungsanlage (2) mit einem Abgaskanal (6) zum Abführen eines Abgases (A) und einer darin angeordneten und vom Abgas (A) durchströmbaren Katalysatoreinrichtung (12) zur katalytischen Abgasreinigung (10), die an einer Eintrittsseite (14) Eintrittsöffnungen (18) für das Abgas (A) aufweist,
wobei an der Eintrittsseite (14) eine Reinigungseinrichtung (20) vorgesehen ist, die eine Reinigungsbürste (22) zum mechanischen Entfernen von Ablagerungen an der Eintrittsseite (14) umfasst **dadurch gekennzeichnet, dass** die Reinigungsbürste (22) nur einen Teilbereich der Eintrittsseite (14) überdeckt und über die Eintrittsseite (14) verfahrbar ist und dass die Reinigungsbürste (22) walzenförmig ausgebildet ist und um eine Walzenlängsachse (24) rotierbar ist.

2. Verbrennungsanlage (2) nach Anspruch 1,
**dadurch gekennzeichnet, dass** die Reinigungsbürste (22) sich über die gesamte Breite der Eintrittsseite (14) erstreckt.

3. Verbrennungsanlage (2) nach einem der vorhergehenden Ansprüche,
**dadurch gekennzeichnet,**
**dass** der Reinigungsbürste (22) ein Abstreifelement (28) zugeordnet ist, das zum Reinigen von Bürstenhaaren (26) der Reinigungsbürste (22) dient.

4. Verbrennungsanlage (2) nach Anspruch 3,
**dadurch gekennzeichnet, dass** das Abstreifelement (28) eine Abstreifkante (32) aufweist, die etwa radial zur Bürstendrehachse orientiert ist, derart, dass die Bürstenhaare (26) beim Abstreifprozess zunächst elastisch gespannt werden und sich anschließend insbesondere abrupt wieder entspannen.

5. Verbrennungsanlage (2) nach einem der vorhergehenden Ansprüche,
**dadurch gekennzeichnet, dass** die Reinigungseinrichtung (20) ergänzend eine Eindüseinrichtung (34) für ein Reinigungsfluid aufweist.

6. Verbrennungsanlage (2) nach Anspruch 5,
**dadurch gekennzeichnet, dass** die Eindüseinrichtung (34) gemeinsam mit der Reinigungsbürste (22) verfahrbar ist.

7. Verbrennungsanlage (2) nach einem der vorhergehenden Ansprüche,
**dadurch gekennzeichnet, dass** die Reinigungseinrichtung (20) ein zur Eintrittsseite (14) offenes Gehäuse (36) umfasst, in dem die Reinigungsbürste (22) angeordnet ist.

8. Verbrennungsanlage (2) nach einem der vorhergehenden Ansprüche,
**dadurch gekennzeichnet, dass** die Bürste (22) mit einem Fluidmotor (48) verbunden ist.

9. Verbrennungsanlage (2) nach einem der vorhergehenden Ansprüche,
**dadurch gekennzeichnet, dass** die Katalysatoreinrichtung (12) mehrere in Strömungsrichtung (8) des Abgases (A) aufeinanderfolgende Katalysatorlagen (12A, 12B) aufweist, wobei die Reinigungseinrichtung (20) mindestens an einer und vorzugsweise an der ersten Katalysatorlage (12A) vorgesehen ist.

## Claims

1. A combustion system (2) with an exhaust gas duct (6) for discharging an exhaust gas (A) and, arranged therein, a catalyst device (12) through which the exhaust gas (A) can flow for catalytic exhaust gas purification (10), which catalyst device has inlet openings (18) for the exhaust gas (A) on the inlet side (14),
a cleaning device (20) being provided on the inlet side (14) which comprises a cleaning brush (22) for mechanically removing deposits on the inlet side (14), **characterised in that** the cleaning brush (22) covers only a subregion of the inlet side (14) and is displaceable over the inlet side (14) and **in that** the cleaning brush (22) is of roller-shaped construction and is rotatable about a roller longitudinal axis (24).

2. A combustion system (2) according to claim 1,
**characterised in that** the cleaning brush (22) extends over the entire width of the inlet side (14).

3. A combustion system (2) according to either of the preceding claims, **characterised in that** a scraper element (28) is associated with the cleaning brush (22), which scraper element serves to clean brush hairs (26) of the cleaning brush (22).

4. A combustion system (2) according to claim 3,
**characterised in that** the scraper element (28) has a scraper edge (32) which is oriented approximately radially to the axis of rotation of the brush, such that, during the scraping process, the brush hairs (26) are initially resiliently tensioned and then in particular abruptly released again.

5. A combustion system (2) according to one of the preceding claims,
**characterised in that** the cleaning device (20) additionally has an injection device (34) for a cleaning fluid.

6. A combustion system (2) according to claim 5,
**characterised in that** the injection device (34) is displaceable together with the cleaning brush (22).

7. A combustion system (2) according to one of the preceding claims, **characterised in that** the cleaning device (20) comprises a housing (36) which is open towards the inlet side (14) and in which the cleaning brush (22) is arranged.

8. A combustion system (2) according to one of the preceding claims,
**characterised in that** the brush (22) is connected to a fluid motor (48).

9. A combustion system (2) according to one of the preceding claims,
**characterised in that** the catalyst device (12) has a plurality of catalyst layers (12A, 12B) which succeed one another in the direction of flow (8) of the exhaust gas (A), wherein the cleaning device (20) is provided at at least one and preferably at the first catalyst layer (12A).

## Revendications

1. Installation de combustion (2) qui comprend un canal d'évacuation (6) pour l'évacuation de gaz d'échappement (A) et un mécanisme (12) faisant office de catalyseur, qui y est incorporé et qui peut être traversé par les gaz d'échappement (A), à des fins de purification catalytique des gaz d'échappement (10), le mécanisme présentant, à un côté entrée (14), des ouvertures d'entrée (18) pour les gaz échappement (A) ; dans laquelle, au côté entrée (14), est prévu un mécanisme de nettoyage (20) qui comprend une brosse de nettoyage (22) pour l'élimination mécanique de dépôts au côté entrée (14) ; **caractérisée en ce que** la brosse de nettoyage (22) ne recouvre qu'une zone partielle du côté entrée (14) et peut être déplacée sur l'étendue du côté entrée (14), et **en ce que** la brosse de nettoyage (22) est réalisée en une configuration de forme cylindrique et est capable d'effectuer des rotations autour d'un axe longitudinal (24) du cylindre.

2. Installation de combustion (2) selon la revendication 1, **caractérisée en ce que** la brosse de nettoyage (22) s'étend sur toute la largeur du côté entrée (14).

3. Installation de combustion (2) selon l'une quelconque des revendications précédentes, **caractérisée en ce qu'**un élément faisant office de racleur (28) est attribué à la brosse de nettoyage (22), qui sert au nettoyage des poils de brosse (26) de la brosse de nettoyage (22).

4. Installation de combustion (2) selon la revendication 3, **caractérisée en ce que** l'élément faisant office de racleur (28) présente une arête de raclage (32), qui est orientée approximativement en direction radiale par rapport à l'axe de rotation de la brosse, d'une manière telle que les poils de brosse (26) sont d'abord soumis à une extension élastique lors du processus de raclage et sont ensuite à nouveau soumis à une détente, en particulier de manière abrupte.

5. Installation de combustion (2) selon l'une quelconque des revendications précédentes, **caractérisée en ce que** le mécanisme de nettoyage (20) présente, à titre complémentaire, un injecteur (34) pour un fluide de nettoyage.

6. Installation de combustion (2) selon la revendication 5, **caractérisée en ce que** l'injecteur (34) peut être déplacé de manière conjointe avec la brosse de nettoyage (22).

7. Installation de combustion (2) selon l'une quelconque des revendications précédentes, **caractérisée en ce que** le mécanisme de nettoyage (20) comprend un logement (36) ouvert en direction du côté entrée (14), dans lequel est disposée la brosse de nettoyage (22).

8. Installation de combustion (2) selon l'une quelconque des revendications précédentes, **caractérisée en ce que** la brosse (22) est reliée à un moteur à fluide (48).

9. Installation de combustion (2) selon l'une quelconque des revendications précédentes, **caractérisée en ce que** le mécanisme (12) faisant office de catalyseur présente plusieurs couches de catalyseur (12A, 12B) qui se succèdent dans la direction d'écoulement (8) des gaz d'échappement (A) ; dans laquelle le mécanisme de nettoyage (20) est prévu au moins contre une couche de catalyseur et de préférence contre la première couche de catalyseur (12A).
